(19) Europäisches Patentamt
European Patent Office
Office européen des brevets

(11) Veröffentlichungsnummer: **0 157 323**
**B1**

(12) # EUROPÄISCHE PATENTSCHRIFT

(45) Veröffentlichungstag der Patentschrift: **31.05.89**

(21) Anmeldenummer: **85103500.6**

(22) Anmeldetag: **25.03.85**

(51) Int. Cl.[4]: **C 08 L 83/06**, C 04 B 41/48, C 04 B 41/49, C 09 D 3/82, D 06 M 15/643, C 08 J 3/02

(54) **Siliconharz-Emulsion.**

(30) Priorität: **06.04.84 DE 3412941**

(43) Veröffentlichungstag der Anmeldung: **09.10.85 Patentblatt 85/41**

(45) Bekanntmachung des Hinweises auf die Patenterteilung: **31.05.89 Patentblatt 89/22**

(84) Benannte Vertragsstaaten: **AT BE CH DE FR GB IT LI NL SE**

(56) Entgegenhaltungen:
**EP-A-0 130 521**
**DE-A-2 330 887**
**US-A-4 433 027**

(73) Patentinhaber: **BAYER AG, D-5090 Leverkusen 1 Bayerwerk (DE)**

(72) Erfinder: **Grape, Wolfgang, Dr., Roggendorfstrasse 61, D-5000 Koeln 80 (DE)**
Erfinder: **Schlak, Ottfried, Dr., Carl- Duisberg-Strasse 331, D-5090 Leverkusen (DE)**
Erfinder: **de Montigny, Armand, Dr., Walter- Flex-Strasse 17, D-5090 Leverkusen (DE)**
Erfinder: **Kober, Hermann, Unterscheider Weg 34, D-5060 Bergisch Gladbach 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 157 323 B1

LIBER, STOCKHOLM 1989

**Beschreibung**

Die vorliegende Erfindung betrifft stabile wäßrige Emulsionen von niedermolekularen alkoxyfunktionellen Siliconharzen, die für Imprägnier- und Beschichtungsanwendungen einsetzbar sind, und die insbesondere bei solchen Anwendungen bevorzugt sind, wo organische Lösungsmittel aufgrund ihrer toxikologischen Eigenschaften und ihrer Brandgefahr unerwünscht sind. Die Erfindung betrifft ferner ein Verfahren zur Herstellung solcher Emulsionen.

Siliconharz-Emulsionen sind an sich bekannt (vgl. z. B. DE-OS-3 200 709). Sie können in vielfältiger Weise eingesetzt werden und haben sich bei zahlreichen Anwendungen - aufgrund ihrer hervorragenden Eigenschaften - sehr gut bewährt. Anwendungsgebiete sind beispielsweise Klebstoffe, Trennüberzüge, Lackzusätze und Färbeformulierungen.

Gemäß einem älteren Vorschlag (EP-A-130 521) sind Emulsionen bekannt, die aus niedermolekularen, alkoxyfunktionellen Siliconharzen, einem Emulgiermittel und Wasser bestehen. Derartige Emulsionen weisen keinen alkalischen pH-Wert auf.

Aus US-A-4 433 027 sind ebenfalls Emulsionen bekannt, die aber aus Siliconölen hergestellt werden. Solcherart hergestellte Emulsionen haben den Nachteil, daß sie nach dem Trocknen im allgemeinen nicht zu vernetzten Gebilden aushärten können. Dadurch wird die Stabilität der hergestellten Beschichtung aber beeinträchtigt.

Somit ergibt sich, daß die bekannten Siliconharz-Emulsionen in mancher Hinsicht verbesserungsbedürftig sind. So läßt vielfach die Eindringtiefe bei Imprägierungen (z. B. im Bausektor) zu wünschen übrig. Häufig ist auch die Aushärtung der Siliconharze und die Verknüpfung mit anderen Harzen nicht voll befriedigend. Es war daher Aufgabe der vorliegenden Erfindung, noch universeller einsetzbare Siliconharz-Emulsionen bereitzustellen.

Gegenstand der vorliegenden Erfindung sind somit lagerstabile, wäßrige Emulsionen niedermolekularer, alkoxyfunktioneller Siliconharze enthaltend

a) 1 - 60 Gew.-% Siliconharz der allgemeinen Formel

$$R^1_xSi(OR^2)_y(O)_{\frac{4-x-y}{2}}$$

wobei
$R^1$ für einen einwertigen Kohlenwasserstoffrest mit 1 - 14 C-Atomen,
$R^2$ für einen einwertigen Kohlenwasserstoffrest mit 1 - 18 C-Atomen steht,
x einen Wert von 0,75 bis 1,5 und
y einen Wert von 0,2 bis 2,0 besitzt, und mit einer Viskosität von 2 bis 2000 mPa.s,

b) 0,1 - 10 Gew.-% eines Emulgiermittels und
c) 30 - 98,5 Gew.-% Wasser,
wobei der pH-Wert der Emulsion einen alkalischen Wert aufweist.

Im Gegensatz zu früher beschriebenen Siliconharz-Emulsionen, wie sie auch z. B. in der DE-OS-3 200 709 beschrieben werden, handelt es sich bei den erfindungsgemäßen Zubereitungen um Emulsionen von niedermolekularen, alkoxyfunktionellen Siliconharzen. Solche alkoxyfunktionellen Siliconharze sind im allgemeinen sehr hydrolyseempfindlich, und sie neigen dazu, in Gegenwart von Wasser zu vergelen.

Überraschenderweise wurde nun gefunden, daß trotz der hohen Anzahl reaktiver Gruppen in den niedermolekularen Siliconharzen stabile Emulsionen aus diesen alkoxyfunktionellen Harzen herstellbar sind. Es ist weiterhin überraschend, daß trotz der beim Emulgierprozeß vorhandenen großen Mengen Wasser keine größeren Mengen durch Hydrolyse entstandenen Alkohols nachgewiesen werden können. Kleinere Mengen auf diesem Wege entstandenen Alkohols machen sich in keiner Weise störend bemerkbar, im Gegenteil, sie können sogar zur Stabilitätserhöhung der erfindungsgemäßen Emulsionen beitragen.

Überraschenderweise wurde nun weiterhin gefunden, daß die Stabilität der erfindungsgemäß hergestellten Emulsion noch weiter verbessert werden kann, wenn die Emulsion auf einen alkalischen pH-Wert eingestellt wird. Besonders bevorzugt ist dabei die Verwendung von Aminen und ein pH-Wert von 7,5 bis 9.

Die erfindungsgemäßen Emulsionen von niedermolekularen alkoxyfunktionellen Siliconharzen enthalten neben Wasser folgende Bestandteile:

1 - 60 Gew.-%, vorzugsweise 20 - 50 %, eines alkoxyfunktionellen niedermolekularen Siliconharzes, das eine Viskosität von 2 bis 2000 mPa.s, vorzugsweise 20 bis 200 mPa.s, besitzt und eine Zusammensetzung der allgemeinen Formel

$$R^1_xSi(OR^2)_y(O)_{\frac{4-x-y}{2}}$$

hat, wobei $R^1$ ein einwertiger Kohlenwasserstoffrest mit 1 bis 14 C-Atomen und vorzugsweise der Methylrest ist, und wobei $R^2$ ein einwertiger Kohlenwasserstoffrest mit 1 bis 18 C-Atomen und vorzugsweise der Methylrest ist, und wobei x einen Wert von 0,75 bis 1,5 besitzt und vorzugsweise x etwa 1 ist, und wobei y einen Wert von 0,2 bis 2, vorzugsweise 0,4 bis 1,2 besitzt.

Die Emulgatorkomponente besteht im allgemeinen aus 0,5 bis 10 % einer Kombination von Emulgiermitteln, wobei sowohl rein nichtionische Emulgiermittel zur Anwendung kommen können als auch eine Kombination eines nichtionischen Emulgiermittels mit entweder einem anionischen oder einem kationischen Emulgiermittel.

Ferner können 0 bis 3 % eines weiteren Emulgierhilfsmittels, insbesondere eines verdickend wirkenden Emulgierhilfsmittels, vorzugsweise auf Cellulosebasis eingesetzt werden.

Im Anschluß an die Herstellung der Emulsion eines niedermolekularen alkoxyfunktionellen Siliconharzes erfolgt die Einstellung des pH-Wertes auf einen alkalischen Wert. Die brauchbare Obergrenze des pH-Werts richtet sich nach praktischen Erwägungen. Je höher der pH-Wert, desto korrosiver ist die Siliconharz-Emulsion, weshalb ein zu hoher Überschuß an basischer Verbindung nicht zugesetzt werden soll. Bei pH-Werten über 12 sind die niedermolekularen alkoxyfunktionellen Siliconharze weniger gut lagerfähig. Bevorzugt ist daher die Einstellung eines pH-Werts der Emulsion im Bereich von 7,5 bis 9.

Die Einstellung des pH-Wertes auf einen alkalischen Wert erfolgt vorzugsweise mit Hilfe eines Amins. Geeignete Amine können primäre, sekundäre oder tertiäre Amine sein, die Kohlenstoff, Wasserstoff und Stickstoff enthalten und außserdem Sauerstoff enthalten können und die in dem zur Emulsionsherstellung verwendeten Wasser löslich sind. Beispiele für diese Amine sind Diethylamin, Ethylendiamin, Butylamin, Hexylamin, Morpholin, Monoethanolamin, Triethylamin, Triethanolamin und Diethylethanolamin. Besonders bevorzugt ist Diethylethanolamin. Die Amine können als solche oder in wäßriger Lösung zugegeben werden.

Die erfindungsgemäßen Emulsionen zeichnen sich durch eine gute Lagerstabilität aus. Der Ausdruck "lagerstabil" bedeutet dabei, daß die Emulsion unter normalen Lagerungsbedingungen mindestens drei Monate ohne Trennung oder Vergelung lagerfähig ist.

Es ist auf dem Siliconharzsektor üblich, daß derartige Harze in Lösungsmitteln hergestellt werden. Das eingesetzte niedermolekulare alkoxyfunktionelle Harz kann somit - bedingt durch die Art seiner Herstellung - noch organische Lösungsmittel enthalten, wobei die Lösungsmittelmenge allerdings 20 %, bezogen auf die Menge des Siliconharzes, nicht überschreiten sollte. Mögliche Lösungsmittel für derartige Harze sind Toluol, Xylol oder Kohlenwasserstoffe, z. B. Benzinfraktionen. Diese organischen Lösungsmittel beeinträchtigen in keiner Weise die Eigenschaften (z. B. die Stabilität) der Emulsion; sie sind jedoch in vielen Fällen unerwünscht. Die bevorzugte Ausführungsform der erfindungsgemäßen Emulgierung ist die, bei der kein organisches Lösungsmittel in der Emulsion enthalten ist; d.h. das organische Lösungsmittel wird vorher entfernt.

Es ist weiterhin vorteilhaft, der erfindungsgemäßen Emulsion eine Emulsion eines die spätere Haftung auf einem Substrat oder die spätere Aushärtung fördernden Mittels zuzusetzen, z. B. Alkylzinnsalze. Die erfindungsgemäße Emulsion kann so direkt nach der Herstellung mit einer Emulsion eines Alkylzinnsalzes abgemischt werden. Es ist allerdings auch möglich, die Zugabe einer Härteremulsion erst direkt vor der gewünschten Anwendung vorzunehmen.

Als Härtungskatalysatoren eignen sich z. B. die bekannten Alkylzinnsalze wie z. B. Dibutylzinndilaurat, Dialkylzinnstearat, Dialkylzinnoktoat u.a..

Die Herstellung der erfindungsgemäß eingesetzten alkoxyfunktionellen Siliconharze ist bekannt und erfolgt durch Reaktion von Alkyl- und/oder Arylchlorsilanen mit Alkohol und Wasser (vgl. z. B. GB-PS-685 173, DE-OS-958 702, FR-PS-1 475 709, US-PS-3 668 180, DE-AS-2 061 189, DE-OS-2 444 529, DE-AS-2 532 887, DE-OS-3 000 782).

Das erfindungsgemäß besonders bevorzugte Methyl-Methoxy-Siliconharz wird durch Reaktion von Methyltrichlorsilanen mit Methanol und Wasser hergestellt. Gegebenenfalls können auch Mischungen von Methyltrichlorsilan und anderen Alkyl- und/oder Arylchlorsilanen und/oder Tetrachlorsilan für die Herstellung der alkoxyfunktionellen Siliconharze verwendet werden, ohne daß die Stabilität der erfindungsgemäßen Emulsion darunter leidet. Ebenso können auch Mischungen verschiedener Alkohole für die Harzherstellung verwendet werden und/oder verschiedene alkoxyfunktionelle Siliconharze miteinander vermischt werden, ohne daß die Stabilität der erfindungsgemäßen Emulsion dadurch beeinträchtigt wird. Jedoch ist aufgrund des Eigenschaftsbildes und der Wirtschaftlichkeit die Verwendung von Methyltrichlorsilan und Methanol für die Herstellung des alkoxyfunktionellen Siliconharzes bevorzugt. Weiterhin können dem Siliconharz geringe Mengen von Mitteln zugesetzt werden, welche die spätere Haftung auf einem Substrat oder die spätere Aushärtung des Siliconharzes auf dem Substrat fördern. Jedoch werden solche Mittel vorzugsweise als getrennt hergestellte Emulsion oder Dispersion zugefügt oder im Wasser der erfindungsgemäßen Emulsion gelöst.

Die Emulsionen auf Wasserbasis der oben beschriebenen Siliconharze werden durch Anwendung einer Kombination von Emulgiermitteln hergestellt. Bevorzugt wird dabei eine Kombination zweier nichtionischer Emulgatoren eingesetzt. Derartige Emulgiermittel sind Polyoxyethylenderivate von Fettalkoholen, z. B. POE(4)-Laurylalkohol, POE(10)-Cetylalkohol, POE(20)-Stearylalkohol, POE(2)-Oleylalkohol, POE(20)-Oleylalkohol u.a., Polyoxyethylenderivate von Fettsäuren z. B. POE-Laurat, POE-Stearat, POE-Oleat u.a., Polyoxyethylensorbitanfettsäureester, z. B. POE(20)-Sorbitanmonolaurat, POE(20)-Sorbitanmonopalmitat, POE(4)-Sorbitanmonostearat, POE(20)-Sorbitantristearat, POE(5)-Sorbitanmonooleat u.a., Polyoxyethylenderivate von mehrwertigen Alkoholen, z. B. POE-Triglycerid, Polyoxyethylenderivate des Nonylphenols, z. B. POE(10)-Nonylphenol, POE(20)-Nonylphenol u.a., Sorbitan- fettsäureester, z. B. Sorbitanmonolaurat, Sorbitanmono- stearat, Sorbitantristearat u.a., und dergleichen mehr.

Die Menge an Emulgiermitteln, die zur Emulgierung von jeweils 100 Gew.-Teilen Harzfeststoffen benötigt wird, wird in einem weiten Bereich in Abhängigkeit von den Verfahrensbedingungen und der Auswahl der restlichen Bestandteile der Emulsion variieren. Bei der erfindungsgemäßen Herstellung der Emulsionen von niedermolekularen alkoxyfunktionellen Siliconharzen ist die Menge an Emulgiermitteln, die benötigt wird, in erster Linie abhängig von dem Gehalt an Alkoxygruppen im alkoxyfunktionellen Siliconharz. Eine Emulgatormenge von 10 Gew.-Teilen bezogen auf 100 Gew.-Teile Siliconharz ist aber im allgemeinen ausreichend zur Herstellung einer lagerstabilen Emulsion eines niedermolekularen alkoxyfunktionellen Siliconharzes. Besonders bevorzugt ist der Einsatz einer Kombination von nichtionischen Emulgiermitteln, insbesondere werden mit einer Kombination der nichtionischen Emulgiermittel POE(40)-Triglycerid/POE(2)-Oleylalkohol oder einer Kombination der nichtionischen Emulgiermittel POE(40)-Triglycerid/POE(6)-Tridecylalkohol stabile Emulsionen aus niedermolekularen alkoxyfunktionellen Siliconharzen hergestellt. Es sind aber auch andere Kombinationen aus nichtionischen Emulgiermitteln einsetzbar. Diese nichtionischen Emulgiermittel sind dem Fachmann im Prinzip geläufig (vgl. z. B. Stache, Tensidtaschenbuch, Hanser Verlag; Mc Cutcheon's Detergents & Emulsifers, North American Edition, 1979).

Es ist weiterhin möglich, eines der beiden eingesetzten nichtionischen Emulgiermittel durch entweder ein kationisches oder ein anionisches Emulgiermittel zu ersetzen, und also eine Kombination eines nichtionischen Emulgiermittels mit einem kationischen oder einem anionischen Emulgiermittel zu verwenden.

Als Emulgierhilfsmittel können alle dem Fachmann geläufigen Emulgierhilfsmittel eingesetzt werden. Besonders bevorzugt sind verdickend wirkende Emulgierhilfsmittel und hier insbesondere das Natriumsalz der Carboxymethylcellulose. Es können aber auch andere Emulgierhilfsmittel wie z. B. längerkettige Alkohole, Polyvinylalkohole, Harnstoff usw. verwendet werden.

Die Methoden (vgl. z. B. E.Manegold, Emulsionen; P.Becker, Emulsions, Theory & Practice, New York 1965, Chapter 7) zur Herstellung von Emulsionen sind dem Fachmann im Prinzip ebenfalls geläufig. Die Reihenfolge der Zugabe der Bestandteile ist im allgemeinen nicht entscheidend. Wegen der Hydrolyseempfindlichkeit der niedermolekularen alkoxyfunktionellen Siliconharze ist im Falle der Emulgierung derartiger Harze diejenige Methode bevorzugt, bei der eine die Emulgier- und Emulgierhilfsmittel enthaltende wäßrige Lösung vorgelegt wird und das alkoxyfunktionelle Harz in diese Lösung eingetragen wird. Das Einsetzen von mechanischen Emulgierhilfen kann ebenfalls erwünscht sein. Zu derartigen mechanischen Emulgierhilfen gehören z. B. schnellaufende Rührer (Ultraturrax), aber auch Druckemulgiermaschinen mit Kolloidmühlen.

Die Einstellung des pH-Wertes auf einen alkalischen Wert erfolgt bevorzugt im Anschluß an die Herstellung der Emulsion des niedermolekularen, alkoxyfunktionellen Siliconharzes. Das für die Einstellung des pH-Wertes verwendete Amin wird entweder als solches oder als wäßrige Lösung zugegeben.

Die erfindungsgemäßen Siliconharzemulsionen werden hauptsächlich zur Imprägnierung und Beschichtung von Cellulosematerial oder anorganisch-oxidischen Materialien (z. B. Mauerwerke) eingesetzt, gegebenenfalls in Kombination mit anderen Emulsionen bzw. Dispersionen. Sie sind geeignet zur Hydrophobierung von mineralischen Dämm- und Isolierstoffen und finden Verwendung als wasserabweisende Bindemittel in Dispersionsfarbanstrichen.

Der Gegenstand der vorliegenden Erfindung soll nunmehr anhand von Beispielen noch näher erläutert werden (%-Angaben beziehen sich - soweit nichts anderes vermerkt ist - auf Gew.-%).

## Beispiele

**Beispiel 1:** Herstellung eines Methylmethoxyharzes

10 Mol Methanol werden mit 5,5 Mol Wasser gemischt und mit einem Tropftrichter bei 30°C Anfangstemperatur langsam zu einem Gemisch aus 6 Mol Methyltrichlorsilan und 400 g Xylol, das in einem Dreihalskolben intensiv gerührt wird, zugetropft. Durch den Aufsatzkühler entweicht gasförmiges HCl. Das Reaktionsgemisch kühlt sich stark ab. Nach Zugabe der wäßrigen Methanollösung wird das Reaktionsgemisch auf 40°C erwärmt und ein Gemisch aus Methanol und HCl im Vakuum abdestilliert. Restliches HCl wird mit wasserfreier Soda neutralisiert und anschließend das Lösungsmittel bei 30 mbar bis 135°C Sumpftemperatur abdestilliert. Nach Abkühlung und Filtration erhält man eine klare farblose Flüssigkeit mit einer Viskosität von 50 mPa.s bei 23°C. Die Zusammensetzung des so hergestellten Methyl-Methoxy-Siliconharzes entspricht der Bruttoformel

$$CH_3Si(O)_{1,1}(OCH_3)_{0,8}.$$

**Beispiel 2:** Emulgierung eines wie unter 1 hergestell-

ten Methyl-Methoxy-Siliconharzes

56 kg Wasser werden in einem Rührwerkskessel vorgelegt und unter Rühren auf 60° erwärmt. 3,2 kg des ersten Emulgators (Polyoxyethylentriglycerid) werden geschmolzen zugegeben. Nach Abkühlen des Gemisches auf 40°C gibt man 0,8 kg des zweiten Emulgators (Oleylalkohol mit 2 Ethylenoxideinheiten) hinzu. Nach einer Nachrührzeit von 10 Minuten werden innerhalb von 1 1/2 h 40 kg des entsprechend Beispiel 1 hergestellten Harzes zugegeben. Man läßt noch 30 Minuten nachrühren.

Die Emulsion wird 9 x mit Hilfe einer Hochdruckemulgiermaschine homogenisiert. Danach wird der pH-Wert durch Zugabe von Diethylethanolamin mit Hilfe eines pH-Meters auf einen pH-Wert von 8,0 eingestellt. Dafür werden ca. 30 g Amin benötigt. Die so hergestellte Emulsion ist trotz des hohen Alkoxygehaltes des alkoxyfunktionellen niedermolekularen Siliconharzes länger als 6 Monate stabil.

**Beispiel 3**

Eine Siliconharz-Emulsion mit einem Siliconharzgehalt von 40 % gemäß Beispiel 2 wurde mit Wasser im Verhältnis 1 : 10 verdünnt (A). Zum Vergleich wurde die 40 %-ige Siliconharz-Emulsion vor dem Verdünnen mit 1,5 Gew.-% einer 15 %-igen Emulsion von Dioctylzinnmaleinat versetzt (B).

Es wurden damit trockene Baustoffprobekörper mit den Abmessungen 50 x 50 x 15 mm durch Eintauchen behandelt. Die Tauchzeit betrug 10 Sekunden. Die so präparierten Proben wurden 7 Tage bei Raumtemperatur und anschließend 3 Tage bei 50° C getrocknet.

Es wurde die kapillare Wasseraufnahme in Gew.-% durch Lagerung der Probekörper in kaltem Wasser bei einer Eintauchtiefe von ca. 3 mm bestimmt.

Es wurden folgende Ergebnisse erzielt:

| | Wasseraufnahme | | Gew.-% |
|---|---|---|---|
| Baustoff | 2 Std. | 6 Std. | 24 Std. |
| Ziegel unbehandelt | 8,5 | 9,0 | 9,8 |
| Ziegel imprägniert (A) | 2,2 | 2,8 | 3,3 |
| Ziegel imprägniert (B) | 0,2 | 0,2 | 0,2 |

**Patentansprüche**

1. Lagerstabile, wäßrige Emulsionen niedermolekularer alkoxyfunktioneller Siliconharze enthaltend im wesentlichen

a) 1 - 60 Gew.-% Siliconharz der allgemeinen Formel

$$R^1{}_xSi(OR^2)_y(O)_{\frac{4-x-y}{2}}$$

wobei

$R^1$ für einen einwertigen Kohlenwasserstoffrest mit 1 - 14 C-Atomen,
$R^2$ für einen einwertigen Kohlenwasserstoffrest mit 1 - 18 C-Atomen,
x einen Wert von 0,75 bis 1,5 und
y einen wert von 0,2 bis 2,0 besitzt, und

mit einer Viskosität von 2 bis 2000 mPa.s,

b) 0,1 - 10 Gew.-% eines Emulgiermittels oder einer Kombination von Emulgiermitteln, wobei immer ein nichtionisches Emulgiermittel zugegen ist, und

c) 30 - 98,5 Gew.-% Wasser,

wobei der pH-Wert der Emulsionen einen alkalischen Wert aufweist.

2. Emulsion gemäß Anspruch 1, dadurch gekennzeichnet, daß der pH-Wert der Emulsion einen Wert zwischen 7,5 und 9 aufweist.

3. Emulsion gemäß Anspruch 1 oder 2, dadurch gekennzeichnet, daß die Emulsion zusätzlich ein organisches Amin enthält.

4. Emulsion gemäß Anspruch 3, dadurch gekennzeichnet, daß das Amin Diethylethanolamin ist.

5. Emulsion gemäß einem der Ansprüche 1 - 4, dadurch gekennzeichnet, daß sie als Emulgiermittel eine Kombination von zwei nichtionischen Emulgatoren enthält.

6) Verwendung von Emulsionen gemäß Ansprüchen 1 bis 5 zur Hydrophobierung von mineralischen Stoffen und von Cellulose-Materalien.

7. Verwendung von Emulsionen gemäß Ansprüchen 1 bis 5 als Imprägnier- und/oder Beschichtungsmittel.

## Claims

1. Storable, aqueous emulsions of low molecular weight alkoxy-functional silicone resins essentially containing

a) 1 to 60 % by weight of a silicone resin corresponding to the following general formula

$$R^1_xSi(OR^2)_y(O)_{\frac{4-x-y}{2}}$$

in which

$R^1$ is a monofunctional hydrocarbon radical containing 1 to 14 C atoms,
$R^2$ is a monofunctional hydrocarbon radical containing 1 to 18 C atoms,
x has a value of 0.75 to 1.5 and
y has a value of 0.2 to 2.0 and having a viscosity of 2 to 2000 mPa.s,

b) 0.1 to 10 % by weight of an emulsifier or a combination of emulsifiers, a nonionic emulsifier always being present, and

c) 30 to 98.5 % by weight water, the pH of the emulsions having an alkaline value.

2. An emulsion as claimed in claim 1, characterized in that the pH of the emulion has a value of from 7.5 to 9.

3. An emulsion as claimed in claim 1 or 2, characterized in that the emulsion additionally contains an organic amine.

4. An emulsion as claimed in claim 3, characterized in that the amine is diethanolamine.

5. An emulsion as claimed in any of claims 1 to 4, characterized in that it contains as emulsifier a combination of two nonionic emulsifiers.

6. The use of the emulsions claimed in claims 1 to 5 for hydrophobicizing mineral materials and cellulose materials.

7. The use of the emulsions claimed in claims 1 to 5 as impregnating and/or coating compositions.

## Revendications

1. Emulsions aqueuses, stables à l'entreposage, de résines de silicone de bas poids moléculaire, à fonctionnalité alkoxy, contenant principalement

a) 1 à 60 % en poids de résine de silicone de formule générale

$$R^1_xSi(OR^2)_y(O)_{\frac{4-x-y}{2}}$$

dans laquelle

$R^1$ est un reste hydrocarboné monovalent ayant 1 à 14 atomes de carbone
$R^2$ est un reste hydrocarboné monovalent ayant 1 à 18 atomes de carbone
x a une valeur de 0,75 à 1,5 et
y a une valeur de 0,2 à 2,0, et ayant une viscosité de 2 à 2000 mPa.s,

b) 0,1 à 10 % en poids d'un émulsionnant ou d'un mélange d'émulsionnants, auquel cas il y a toujours au moins un émulsionnant non ionique, et

c) 30 à 98,5 % en poids d'eau, le pH des émulsions présentant une valeur alcaline.

2. Emulsion suivant la revendication 1, caractérisée en ce que son pH a une valeur comprise entre 7,5 et 9.

3. Emulsion suivant la revendication 1 ou 2, caractérisé en ce qu'elle contient en outre une amine organique.

4. Emulsion suivant la revendication 3, caractérisée en ce que l'amine est la diéthyléthanolamine.

5. Emulsion suivant l'une des revendications 1 à 4, caractérisée en ce qu'elle contient comme émulsionnants une association de deux émulsionnants non ioniques.

6. Utilisation d'émulsions suivant les revendications 1 à 5 pour rendre hydrophobes des substances minérales et des matières cellulosiques.

7. Utilisation d'émulsions suivant les revendications 1 à 5 comme agents d'imprégnation et/ou agents de revêtement.